# EUROPÄISCHE PATENTSCHRIFT

(11) **EP 0 964 782 B1**
(45) Veröffentlichungstag und Bekanntmachung des Hinweises auf die Patenterteilung: **07.08.2002**
(21) Anmeldenummer: 98912423.5
(22) Anmeldetag: 28.02.1998
(51) Int. Cl.: B41B 21/14, G02B 27/09

(54) **BELEUCHTUNGSEINRICHTUNG ZUR BILDAUFNAHME**
LIGHTING DEVICE FOR PICTURE RECORDING
DISPOSITIF D'ECLAIRAGE POUR PRISE DE VUE

(30) Priorität: 07.03.1997 DE 19709302
(43) Veröffentlichungstag der Anmeldung: 22.12.1999
(73) Patentinhaber: Astrium GmbH, 85521 Ottobrunn (DE)
(72) Erfinder: WEIDEL, Edgar, D-89250 Senden (DE)
(74) Vertreter: Hansmann, Dierk, Dipl.-Ing.
(86) Internationale Anmeldenummer: EP9801144
(87) Internationale Veröffentlichungsnummer: WO9840210

(56) Entgegenhaltungen:
- US-A- 4 971 415
- PATENT ABSTRACTS OF JAPAN vol. 010, no. 048 (P-431), 25.Februar 1986 & JP 60 193140 A (TOKYO DENKI KK), 1.Oktober 1985,
- PATENT ABSTRACTS OF JAPAN vol. 012, no. 324 (E-653), 2.September 1988 & JP 63 087780 A (NEC CORP), 19.April 1988,
- PATENT ABSTRACTS OF JAPAN vol. 006, no. 205 (E-136), 16.Oktober 1982 & JP 57 112147 A (FUJITSU KK), 13.Juli 1982,

## Beschreibung

Die Erfindung betrifft eine Anordnung zur Bildaufnahme nach dem Oberbegriff des Patentanspruchs 1.

Die Erfindung findet Verwendung für Bildsensoren, die in der Robotik, in Navigationsund Überwachungssystemen eingesetzt werden. Als Lichtquelle für derartige Sensoren wird bevorzugt ein Halbleiterlaser verwendet, der vorzugsweise in einer Richtung aufgeweitet ist. Als Kamera ist vorzugsweise eine CCD-Kamera mit einem elektronisch gesteuerten Verschluß vorgesehen. Das von dem beleuchteten Objekt reflektierte Licht wird durch vor dem Objektiv der Kamera angebrachte optische Filter von dem umgebenden restlichen sichtbaren und infraroten Licht gefiltert, so daß im wesentlichen das Laserlicht zu einem Bild in der Kamera verarbeitet wird.

Beim Einsatz eines Lasers als Lichtquelle sind die Vorschriften zur Verhütung von Unfällen durch Laserstrahlung zu beachten. Diese erlauben bei der aufgeweiteten Ausstrahlung des Laserlichtes bei einer Wellenlänge von 750-850 nm für z.B. einen GaAs-Laser lediglich Laserleistungen von 50-100mW, um die maximal zulässige Bestrahlung für die Einwirkung der Laserstrahlung auf die Netzhaut des Auges einzuhalten.

In der DE 43 35 244 A1 ist eine gattungsgemäße Anordnung zur Bildaufnahme beschrieben, bei der Lichtleistung des Lasers derart verteilt wird, daß ein im ausgeleuchteten Bereich befindliches optisches System, wie z.B. das menschliche Auge, ggf. mit optischen Hilfsmitteln, keine Punktabbildung der Laserlichtquelle erreichen kann. Die Ausleuchtungseigenschaften der Beleuchtungseinrichtung, beispielsweise durch die Erzeugung eines fächerförmigen Lichtbündels, werden dadurch nicht beeinträchtigt.

Außerdem sind aus US 4 971 415 A und JP 60 193 140 A auch in kreisbogenförmiger Anordnung aus mehreren Halbleiterlasern bekannt.

Der Erfindung liegt die Aufgabe zugrunde, eine verbesserte Beleuchtungseinrichtung zur Bildaufnahme anzugeben, für die bei Laserleistungungen größer 1W im gesamten Beleuchtungsbereich die maximal zulässige Bestrahlung eingehalten wird, die gute räumliche Auflösungseigenschaften und eine hohe Bildfrequenz besitzt und in einer kompakten Bauweise herstellbar ist.

Die Erfindung ist in Patentanspruch 1 beschrieben. Eine vorteilhafte Ausgestaltung und/oder Weiterbildung ist dem Unteranspruch zu entnehmen.

Die Erfindung hat den Vorteil, daß durch die Umwandlung einer punktförmigen Laserlichtquelle in eine ausgedehnte Lichtquelle und eine quadratische Gestaltung der Lichtaustrittsfläche der Beleuchtungseinrichtung optimale Bedingungen für die maximal zulässige Bestrahlung der Netzhaut des Auges gegeben sind (siehe IEC 825/1). Um eine optimale Ausleuchtung einer quadratischen Fläche durch einen Laser zu erreichen, der eine richtungsabhängige Divergenz besitzt, werden mehrere einzelne Laser kreisbogenförmig angeordnet, so daß das Laserlicht ohne große seitliche Abstrahlungsverluste direkt auf eine Zerstreuungslinse trifft und derart aufgeweitet wird, daß ein am Ausgang der Beleuchtungseinrichtung befindliches optisches Element maximal ausgeleuchtet wird. Weiterhin ist vorteilhaft, daß mehrere einzelne Laser in Reihe geschaltet werden und dadurch bei einem geringeren elektrischen Strom die gleiche Laserlichtleistung (z.B. 0,8 W/A pro Laser) erzeugt wird. Durch einen gepulsten Betrieb der Laserlichtquelle kann bei Pulslängen von wenigen Nanosekunden bis einigen hundert Nanosekunden eine weitere Steigerung der Laserleistung bis zu 200 W erreicht werden. Das Tastverhältnis beträgt etwa 1% und die Anzahl der Pulse für ein Bild liegt zwischen 1000 und 4000.

Die Erfindung wird nachfolgend anhand eines Ausführungsbeispiels beschrieben unter Bezugnahme auf schematische Zeichnungen.

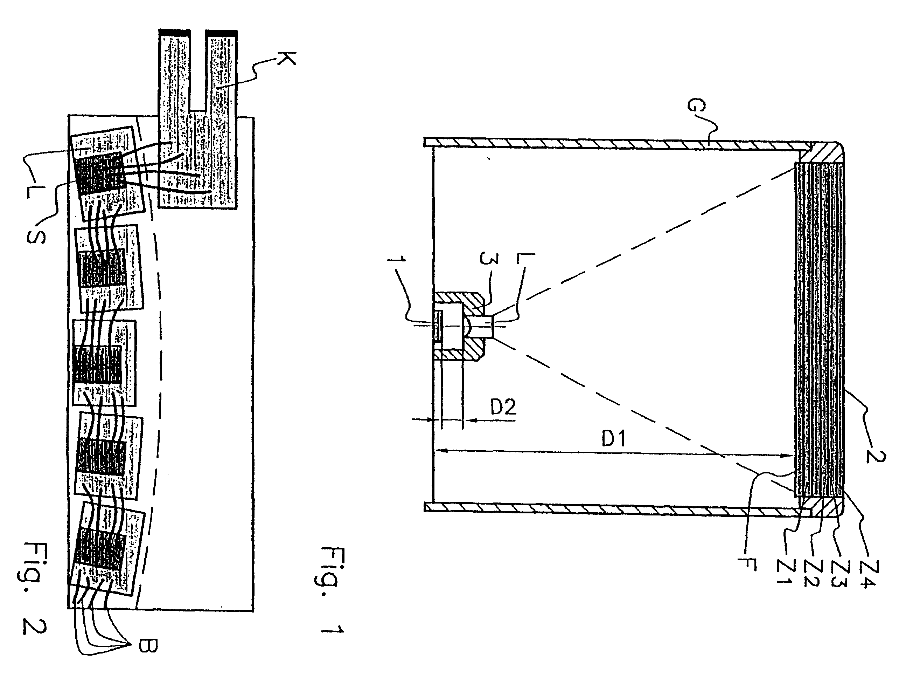

In Fig. 1 ist eine Beleuchtungseinrichtung dargestellt, bei der in einem Gehäuse G eine Laserlichtquelle 1 und ein optisches Element 2 in einem Abstand D1 eingebracht sind. Der Abstand D1 beträgt beispielsweise 120 mm. Das optische Element 2 ist als quadratische Platte mit einer Fläche von z.B. 100mmx100mm ausgestaltet und besteht aus mehreren Linsen. Dabei ist die auf der der Laserlichtquelle 1 zugewandten Seite befindliche Linse F als großflächige Sammellinse, z.B. als Fresnellinse ausgebildet, mit einer Brennweite entsprechend dem Abstand D1. Daran anschließend sind weitere zylindrische Linsen angeordnet, die z.B. auf der dem Laser abgewandten Seite eine Vielzahl flächig eng aneinander gefügter zylindrischer Mikrolinsen mit etwa gleicher Brennweite besitzen, die aber klein gegen die Brennweite der Sammellinse ist. Die zylindrischen Mikrolinsen der jeweiligen Linse haben die gleiche Breite B. Die einzelnen Linsen können jedoch unterschiedliche Breiten besitzen. Beispielsweise sind vier zylindrische Linsen Z1, Z2, Z3, Z4 anschließend an die Fresnellinse F angeordnet Die Mikrolinsen der Linsen Z1, Z2, Z3, Z4 besitzen z.B.einen Radius von 0,5 mm. Die Breite B der jeweiligen Mikrolinsen beträgt beispielsweise für die Linse Z1 0,7 mm, für die Linse Z2 0,5 mm und für die Linsen Z3, Z4 0,2 mm. Die Linsen Z1, Z2 sind derart angeordnet, daß das Laserlicht aufgeweitet und ein optimaler Beleuchtungswinkel eingestellt wird. Durch die Linsen Z3, Z4 wird eine gleichmäßige Intensitätsverteilung des Laserlichtes erzielt. Anstelle der zylindrischen Linsen Z1 bis Z4 kann auch ein holographischer Diffuser verwendet werden.

Die Laserlichtquelle 1 besteht aus mehreren seriell geschalteten Lasern L, deren Laserstirnflächen S zueinander geneigt angeordnet sind ( Fig.2). Dadurch entsteht eine kreisbogenförmige Wirkungsfläche der Laser, mit der eine optimale Ausleuchtung des optischen Elementes erreicht wird. Beispielsweise sind fünf Laser in dieser Weise einem Kreisbogen mit einem Radius von 18mm zugeordnet, dessen Mittelpunkt auf der optischen Achse einer im Abstand D2 von der Laserlichtquelle angeordneten Zerstreungslinse Z liegt (Fig. 1). Durch die kreisbogenförmige Anordnung trifft das Laserlicht ohne große seitliche Abstrahlungsverluste auf die Zerstreungslinse. Die einzelnen Laser sind z.B. mit vier parallelen Bonddrähten B verbunden, die mittels Keilbonden hergestellt werden. Dadurch wird eine breite, induktionsarme und kurze Verbindung hergestellt. Die Laser sind über einen Kontaktstützpunkt K mittels einer Bandleitung mit dem Lasertreiber verbunden. Die Bandleitung besitzt z.B. eine Breite von 15mm.

Um eine optimale Ausleuchtung des optischen Elementes zu erreichen, wird das Laserlicht durch die Zerstreuungslinse Z mit einer Brennweite f von z.B. 6,3 mm aufgeweitet. Der Abstand D2 beträgt ungefähr das Doppelte der Brennweite f.
Die Laserlichtquelle 1 ist von einem Gehäuse 3, in das die Zylinderlinse Z integriert ist, umschlossen.

Für die o.a. Ausgestaltung des optischen Elementes und der Laserlichtquelle kann bis zu zulässigen Lichtleistungen der Beleuchtungseinrichtung von 80W, die Lasereinrichtung der Klasse 1 zugeordnet werden. Die Erfindung ist nicht auf die in dem Ausführungsbeispiel angegebene Laserlichtquelle beschränkt, sondern sowohl die Anzahl der in Reihe geschalteten Laser als auch die Anordnung der Laser kann je nach gewünschter Lichtleistung variieren. Es können beispielsweise auch zwei Laserlichtquellen mit in Reihe geschalteten Lasern parallel angeordnet werden. Dadurch erreicht man eine höhere Lichtleistung.

## Patentansprüche

1. Beleuchtungseinrichtung zur Bildaufnahme, die eine Laserlichtquelle (1) und ein von dieser ausgeleuchtetes optisches Element (2) zur Formung des Laserlichtes enthält, wobei die Ausleuchtung des optischen Elementes mittels einer Zerstreuungslinse (Z) erfolgt, die zwischen Laserlichtquelle (1) und optischem Element (2) angeordnet ist und das optische Element (2) aus mehreren zylindrischen Linsen aufgebaut ist, wobei die auf der der Laserlichtquelle (1) zugewandten Seite angeordnete Linse als Sammellinse (F) ausgebildet ist sowie die zylindrischen Linsen auf der dem Laser abgewandten Seite eine Vielzahl flächig eng aneinandergefügte Mikrolinsen besitzen, **dadurch gekennzeichnet, daß** die Laserlichtquelle mehrere elektrisch seriell geschaltete Laser enthält und die Laser kreisbogenförmig angeordnet sind, derart, daß der Mittelpunkt des Kreisbogens auf der optischen Achse der Zerstreuungslinse (Z) liegt und das optische Element (2) vier zylindrische Linsen (Z1, Z2, Z3, Z4) enthält, von denen eine erste Gruppe von zwei Linsen (Z1, Z2) das Laserlicht aufweiten und eine zweite Gruppe von zweite Linsen (Z3, Z4) die Intensitätsverteilung des Laserlichtes bestimmen.

2. Beleuchtungseinrichtung nach Anspruch 1, **dadurch gekennzeichnet, daß** anstelle der weiteren zylindrischen Linsen (Z1, Z2, ...) ein holographischer Diffuser angeordnet ist.

## Claims

1. Lighting device for picture recording that comprises a laser-light source (1) and an optical element (2) illuminated by it for shaping the laser light, wherein the optical element is illuminated by means of a diverging lens (Z) that is disposed between laser-light source (1) and optical element (2), and the optical element (2) is made up of a plurality of cylindrical lenses wherein the lens disposed on the side facing the laser-light source (1) is designed as converging lens (F) and also the cylindrical lenses on the side facing away from the laser have a multiplicity of microlenses closely assembled together in a two-dimensional manner, **characterized in that** the laser-light source comprises a plurality of lasers connected electrically in series and the lasers are disposed in circular arc form in such a way that the centrepoint of the circular arc is situated on the optical axis of the diverging lens (Z) and the optical element (2) comprises four cylindrical lenses (Z1, Z2, Z3, Z4), of which a first group of two lenses (Z1, Z2) expands the laser light and a second group of two lenses (Z3, Z4) determines the intensity distribution of the laser light.

2. Lighting device according to Claim 1, **characterized in that**, instead of the further cylindrical lenses (Z1, Z2, ...), a holographic diffuser is provided.

## Revendications

1. Dispositif d'éclairage pour prise de vues comprenant une source de lumière laser (1) et un élément optique (2) éclairé par cette source et destiné à former la lumière laser, l'élément optique étant éclairé à l'aide d'une lentille divergente (Z) située entre la source de lumière laser (1) et l'élément optique (2), l'élément optique (2) étant constitué de plusieurs lentilles cylindriques, la lentille située sur le côté orienté vers la source de lumière laser (1) se présentant sous la forme d'une lentille convergente (F) et les lentilles cylindriques situées sur le côté éloigné du laser présentant de nombreuses microlentilles soudées les unes aux autres en surface, **caractérisé en ce que** la source de lumière laser comprend plusieurs lasers commutés électriquement en série et les lasers se présentent sous la forme d'un arc de cercle, de telle sorte que le point central dudit arc de cercle soit situé sur l'axe optique de la lentille divergente (Z) et l'élément optique (2) comprenne quatre lentilles cylindriques (Z1, Z2, z3, z4), deux de ces lentilles (z1, z2) dispersant la lumière laser et deux'autres (z3, z4) déterminant la répartition d'intensité de la lumière laser.

2. Dispositif d'éclairage conforme à la revendication 1, **caractérisé en ce qu'**un diffuseur holographique est disposé en lieu et place des lentilles cylindriques (Z1, Z2, ...)
